(19) Europäisches Patentamt / European Patent Office / Office européen des brevets

(11) **EP 4 550 198 A1**

(12) **EUROPÄISCHE PATENTANMELDUNG**

(43) Veröffentlichungstag:
07.05.2025   Patentblatt 2025/19

(21) Anmeldenummer: 23206575.5

(22) Anmeldetag: **30.10.2023**

(51) Internationale Patentklassifikation (IPC):
*G06F 30/20* (2020.01)      *G05B 23/02* (2006.01)
*G06F 17/18* (2006.01)      *G06F 17/00* (2019.01)
*G06F 111/08* (2020.01)

(52) Gemeinsame Patentklassifikation (CPC):
**G06F 30/20; G05B 23/0254; G06F 17/18;**
G06F 30/25; G06F 2111/08

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Robert Bosch GmbH
70442 Stuttgart (DE)**

(72) Erfinder:
- **Von Keler, Johannes
  72074 Tuebingen (DE)**
- **Schmidt, Kevin
  71083 Herrenberg (DE)**
- **Hoffmann, Joachim
  70734 Fellbach (DE)**
- **Vandamme, Antoine
  70839 Gerlingen (DE)**

(54) **VERFAHREN ZUM PRÜFEN EINER PLAUSIBILITÄT EINER STOCHASTISCHEN TESTLÖSUNG FÜR EINE MESSGRÖSSE EINES TECHNISCHEN SYSTEMS**

(57)    Die Erfindung betrifft ein Verfahren zum Prüfen einer Plausibilität einer stochastischen Testlösung für eine Messgröße eines technischen Systems. Ferner betrifft die Erfindung ein Computerprogramm, eine Vorrichtung sowie ein Speichermedium zu diesem Zweck.

## Fig. 1

**Beschreibung**

Die Erfindung betrifft ein Verfahren zum Prüfen einer Plausibilität einer stochastischen Testlösung für eine Messgröße eines technischen Systems. Ferner betrifft die Erfindung ein Computerprogramm, eine Vorrichtung sowie ein Speichermedium zu diesem Zweck.

Stand der Technik

In der modernen Ingenieurs- und Naturwissenschaft ist die Simulation komplexer Modelle ein unverzichtbares Werkzeug zur Analyse und Vorhersage von Systemverhalten. Während deterministische Simulationen wertvolle Erkenntnisse bieten können, haben sie den Nachteil, Unsicherheiten und zufällige Einflüsse, die in realen Systemen inhärent vorhanden sind, nicht ausreichend zu berücksichtigen. An dieser Stelle gewinnt die stochastische Modellsimulation an Bedeutung. Diese Methode integriert Zufallsvariablen und -prozesse in das Simulationsmodell, um eine umfassendere Darstellung der Systemdynamik zu ermöglichen, die Unsicherheiten und Schwankungen berücksichtigt.

Stochastische Simulationen sind besonders nützlich, wenn es darum geht, Risiken zu evaluieren, Entscheidungen unter Unsicherheit zu treffen oder komplexe Systeme zu analysieren, die von einer Vielzahl von unvorhersehbaren Faktoren beeinflusst werden.

Die Methodik der stochastischen Simulation reicht von Monte-Carlo-Methoden über stochastische Differenzialgleichungen bis hin zu spezialisierten Ansätzen wie Polynomial Chaos und Markov-Chain-Monte-Carlo-Techniken. Durch die Kombination von statistischen Analysen und rechnerischen Algorithmen bietet stochastische Modellsimulation ein robustes Framework zur Modellierung von Systemen, in denen Unsicherheit und Variabilität eine signifikante Rolle spielen.

Offenbarung der Erfindung

Gegenstand der Erfindung ist ein Verfahren mit den Merkmalen des Anspruchs 1, ein Computerprogramm mit den Merkmalen des Anspruchs 9, eine Vorrichtung mit den Merkmalen des Anspruchs 10 sowie ein computerlesbares Speichermedium mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zum Prüfen einer Plausibilität einer stochastischen Testlösung für eine Messgröße eines technischen Systems, umfassend die nachfolgenden Schritte, wobei die Schritte wiederholt und/oder nacheinander durchgeführt werden können. Die stochastische Testlösung ist insbesondere als eine zu testende Lösung einer stochastischen Modellsimulation zu verstehen.

In einem ersten Schritt werden vorzugsweise Messdaten für die Messgröße des technischen Systems bereitgestellt. Die Messdaten können aus einem Sensor des technischen Systems resultieren oder alternativ auch simulierte Messdaten sein, welche reale Messdaten eines Sensors simulieren.

In einem weiteren Schritt wird vorzugsweise eine erste stochastische Referenzlösung für die Messgröße des technischen Systems unter Verwendung eines ersten Unsicherheitsquantifizierungsverfahrens auf Basis der bereitgestellten Messdaten ermittelt. Die erste stochastische Referenzlösung modelliert dabei die Messgröße. Durch die erste stochastische Referenzlösung kann zumindest eine statistische Charakterisierung der Messdaten bereitgestellt werden. Das erste Unsicherheitsquantifizierungsverfahren (englisch: Uncertainty Quantification Method) ist insbesondere ein stochastisches Verfahren und kann beispielsweise Latin Hypercube Sampling (LHS) oder Standard Monte-Carlo (SMC) sein. Das erste Unsicherheitsquantifizierungsverfahren ist somit insbesondere ein vergleichsweise ineffizientes Verfahren, welches einen erhöhten Rechen- und Zeitaufwand benötigt.

In einem weiteren Schritt wird vorzugsweise eine zweite stochastische Referenzlösung aus einer Anwendung einer Regressionsmethode auf Basis der ermittelten ersten stochastischen Referenzlösung ermittelt. Die Regressionsmethode kann beispielsweise eine lineare Regression, eine Nichtparametrische Regression, eine Semiparametrische Regression oder eine Robuste Regression sein. Die zweite stochastische Referenzlösung ist bevorzugt eine Chaos Polynom Variable und die Regressionsmethode ist bevorzugt eine Polynomial Chaos Regression oder ein vergleichbares Verfahren.

In einem weiteren Schritt wird vorzugsweise die ermittelte erste stochastische Referenzlösung mit der ermittelten zweiten stochastischen Referenzlösung verglichen, um die ermittelte zweite stochastische Referenzlösung zu plausibilisieren. Dafür kann beispielsweise ein Root-Mean Square Fehler ermittelt werden.

In einem weiteren Schritt wird vorzugsweise die stochastische Testlösung für die Messgröße des technischen Systems auf Basis von weiteren bereitgestellten Messdaten für die Messgröße ermittelt. Das Ermitteln der stochastischen Testlösung kann unter Verwendung eines zweiten Unsicherheitsquantifizierungsverfahrens auf Basis einer Modellsimulation des technischen Systems durchgeführt werden, um zumindest eine statistische Charakterisierung der weiteren Messdaten bereitstellen. Das zweite Unsicherheitsquantifizierungsverfahren ist bevorzugt Chaos Polynom (englisch: Polynomial Chaos Expansion). Die stochastische Testlösung kann ebenfalls eine Chaos Polynom Variable sein. Das zweite Unsicherheitsquantifizierungsverfahren ist somit ein effizientes Verfahren, welches gegenüber dem ersten Unsicherheitsquantifizierungsverfahren einen geringeren Rechen- und Zeitaufwand benötigt.

In einem weiteren Schritt wird vorzugsweise die ermittelte zweite stochastische Referenzlösung mit der ermittelten stochastischen Testlösung verglichen, um die Plausibilität der stochastischen Testlösung für die Messgröße des technischen Systems zu prüfen.

Das Verfahren kann somit vorteilhaft eine genauere und robustere Plausibilisierung der stochastischen Testlösung für die Messgröße des technischen Systems ermöglichen. Dadurch kann vorteilhaft ein Vertrauen gegenüber Ergebnissen von stochastischen Modellsimulationen, welche die stochastische Testlösung bereitstellen, erhöht werden.

Ein weiterer Vorteil im Rahmen der Erfindung ist erzielbar, wenn das Ermitteln der ersten stochastischen Referenzlösung den folgenden Schritt umfasst:

- Berechnen eines ersten Mittelwertes und einer ersten Standardabweichung auf Basis der bereitgestellten Messdaten.

Diese berechneten statistischen Größen können vorteilhaft für den Vergleich und entsprechend für das Plausibilisieren herangezogen werden.

Ferner ist es denkbar, dass die Regressionsmethode auf Basis wenigstens eines Polynoms durchgeführt wird, wobei das Ermitteln der zweiten stochastischen Referenzlösung den folgenden Schritt umfasst:

- Berechnen von einzelnen Koeffizienten des wenigstens einen Polynoms.

Optional kann es vorgesehen sein, dass das Vergleichen der ermittelten ersten stochastischen Referenzlösung mit der ermittelten zweiten stochastischen Referenzlösung den folgenden Schritt umfasst:

- Ermitteln eines mittleren Abweichungsquadrats zwischen der ermittelten ersten stochastischen Referenzlösung und der ermittelten zweiten stochastischen Referenzlösung.

Das mittlere Abweichungsquadrat kann im Rahmen der vorliegenden Erfindung auch als Root-Mean Square Fehler bezeichnet und verstanden werden.

In einer weiteren Möglichkeit kann vorgesehen sein, dass die Messdaten aus einer Erfassung wenigstens eines Sensors des technischen Systems resultieren. Das technische System kann beispielsweise eine Maschine, insbesondere ein Fahrzeug, sein. Die Plausibilität der stochastischen Testlösung kann geprüft werden, um anschließend das Ermitteln der stochastischen Testlösung für das technische System verwenden zu können. Die stochastische Testlösung kann wiederum ermittelt werden, um die Messgröße in einem Regelkreis des technischen Systems zu ermitteln.

Ein weiterer Vorteil im Rahmen der Erfindung ist erzielbar, wenn das Ermitteln der stochastischen Testlösung auf Basis wenigstens eines Testpolynoms durchgeführt wird und/oder das Ermitteln der stochastischen Testlösung wenigstens einen der folgenden Schritte umfasst:

- Berechnen von einzelnen Testkoeffizienten des Testpolynoms,
- Berechnen eines zweiten Mittelwerts und einer zweiten Standardabweichung auf Basis der berechneten Testkoeffizienten des Testpolynoms.

Das Testpolynoms ist insbesondere als zu testendes Polynom und die Testkoeffizienten sind insbesondere als zu testende Koeffizienten des Testpolynoms zu verstehen. Diese berechneten statistischen Größen können vorteilhaft für den Vergleich und entsprechend für das Plausibilisieren herangezogen werden.

Ferner ist es optional vorgesehen, dass das Verfahren ferner den folgenden Schritt umfasst:

- Vergleichen des berechneten ersten Mittelwerts mit dem berechneten zweiten Mittelwert und/oder der berechneten ersten Standardabweichung mit der berechneten zweiten Standardabweichung.

Ferner ist es optional vorgesehen, dass das Vergleichen der ermittelten zweiten stochastischen Referenzlösung mit der ermittelten stochastischen Testlösung den folgenden Schritt umfasst:

- Vergleichen der Koeffizienten des Polynoms mit den Testkoeffizienten des Testpolynoms.

Durch das Vergleichen sowohl der Testkoeffizienten des Testpolynoms der stochastischen Testlösung mit den Koeffizienten des Polynoms der zweiten stochastischen Referenzlösung als auch der jeweiligen Mittelwerte und Standardabweichungen der stochastischen Testlösung und der zweiten stochastischen Referenzlösung kann vorteilhaft eine besonders zuverlässige Prüfung der Plausibilität ermöglicht werden.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1     eine schematische Visualisierung eines Verfahrens, eines technischen Systems, einer Vorrichtung, eines Speichermediums sowie eines Computerprogramms gemäß Ausführungsbeispielen der Erfindung,

Fig. 2     eine schematische Darstellung eines Verfahrens gemäß Ausführungsbeispielen der Erfindung.

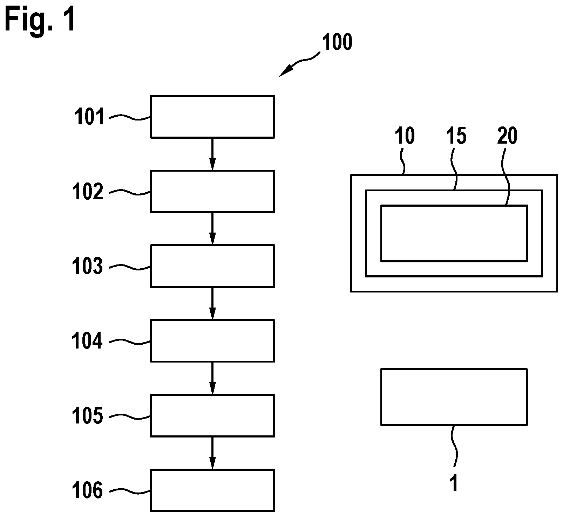

In Fig. 1 sind ein Verfahren 100, ein technisches System 1, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Verfahren 100 zum Prüfen einer Plausibilität einer stochastischen Testlösung für eine Messgröße eines technischen Systems 1, umfassend die nachfolgenden Schritte. In einem ersten Schritt 101 werden Messdaten für die Messgröße des technischen Systems 1 bereitgestellt. In einem zweiten Schritt 102 wird eine erste stochastische Referenzlösung für die Messgröße des technischen Systems 1 unter Verwendung eines ersten Unsicherheitsquantifizierungsverfahrens auf Basis der bereitgestellten Messdaten ermittelt, wobei die erste stochastische Referenzlösung die Messgröße modelliert, um zumindest eine statistische Charakterisierung der Messdaten bereitzustellen. In einem dritten Schritt 103 wird eine zweite stochastische Referenzlösung aus einer Anwendung einer Regressionsmethode auf Basis der ermittelten ersten stochastischen Referenzlösung ermittelt. In einem vierten Schritt 104 wird die ermittelte erste stochastische Referenzlösung mit der ermittelten zweiten stochastischen Referenzlösung verglichen, um die ermittelte zweite stochastische Referenzlösung zu plausibilisieren. In einem fünften Schritt 105 wird die stochastische Testlösung für die Messgröße des technischen Systems 1 auf Basis von weiteren bereitgestellten Messdaten für die Messgröße ermittelt, wobei das Ermitteln der stochastischen Testlösung unter Verwendung eines zweiten Unsicherheitsquantifizierungsverfahrens auf Basis einer Modellsimulation des technischen Systems 1 durchgeführt wird, um zumindest eine statistische Charakterisierung der weiteren Messdaten bereitstellen. In einem sechsten Schritt 106 wird die ermittelte zweite stochastische Referenzlösung mit der ermittelten stochastischen Testlösung verglichen, um die Plausibilität der stochastischen Testlösung für die Messgröße des technischen Systems 1 zu prüfen.

Das Verfahren gemäß Ausführungsbeispielen kann vorteilhaft eine genauere und robustere Plausibilisierung einer berechneten stochastischen Modellausgabegröße ermöglichen, d.h. insbesondere der stochastischen Testlösung, deren stochastische Verteilung von einer klassischen Gauß-Verteilung abweichen kann. Ferner ermöglicht das Verfahren gemäß Ausführungsbeispielen insbesondere ein systematisches Vorgehen bei der Plausibilisierung einer solchen stochastischen Modellausgabegröße.

Vorteile durch das Verfahren gemäß Ausführungsbeispielen sind beispielsweise eine Steigerung eines Vertrauens gegenüber Ergebnissen stochastischer Modellsimulationen (z.B. bei einer Toleranzanalyse), die bei der Produktentwicklung als Basis für Designentscheidungen intensiv verwendet werden. Ferner kann vorteilhaft eine Zeitersparnis bei der Entwicklung stochastischer Simulationsmodelle bereitgestellt werden. Die genauere Plausibilisierung einer als Chaos Polynom Variable berechneten stochastischen Modellausgabegröße ermöglicht insbesondere eine schnellere Detektion potenzieller Implementierungsfehler. Zudem kann die Implementierung des Plausibilisierungstests gemäß Ausführungsbeispielen der Erfindung lediglich einen überschaubaren Zusatzaufwand bei der Entwicklung stochastischer Simulationsmodelle benötigen.

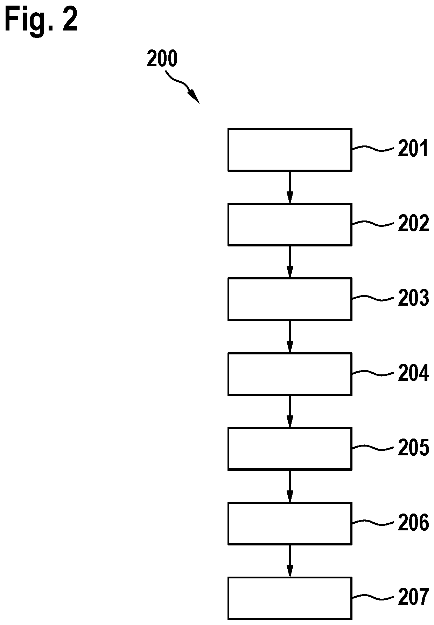

Das Verfahren 200 umfasst gemäß dem Ausführungsbeispiel in Fig. 2 die folgenden Schritte. In einem ersten Schritt 201 wird durch ein Standard Unsicherheitsquantifizierungsverfahren (englisch uncertainty quantification (UQ) method) eine erste stochastische Referenzlösung ermittelt, wobei ein Mittelwert $\mu_{ref}$ und eine Standardabweichung $\sigma_{ref}$ ermittelt wird. Das Standard Unsicherheitsquantifizierungsverfahren kann beispielsweise Standard Monte-Carlo (SMC) oder Latin Hypercube Sampling (LHS) sein. In einem zweiten Schritt 202 wird auf Basis der ersten ermittelten Referenzlösung eine zweite stochastische Referenzlösung in Form einer Chaos Polynom Variable ermittelt, z.B. über Polynomial Chaos Regression - PCR. Die Darstellung als Chaos Polynom Variable ermöglicht insbesondere den Vergleich der einzelnen Koeffizienten der zweiten stochastischen Referenzlösung mit den einzelnen Koeffizienten der stochastischen Testlösung. Dabei werden einzelne Koeffizienten des Polynoms der Chaos Polynom Variable berechnet. In einem dritten Schritt 203 wird die im Schritt 202 ermittelte PC-Referenzvariable mit der im Schritt 201 ermittelten ersten stochastischen Referenzlösung verglichen, wofür der Root-Mean Square Error ermittelt wird. In einem vierten Schritt 204 wird eine stochastische Testlösung in Form einer stochastischen Modellausgabegröße aus einer Modellsimulation als Chaos Polynom Variable ermittelt, z.B. aus einem nicht-intrusiven Verfahren, oder aus einem intrusiven Verfahren. Ferner werden die einzelnen Koeffizienten des Polynoms, insbesondere des Testpolynoms, der stochastischen Testlösung, d.h. der entsprechenden Chaos Polynom Variable, berechnet. Ferner wird ein Mittelwert und eine Standardabweichung aus den Koeffizienten dieses Polynoms berechnet. In einem fünften Schritt 205 werden die Mittelwerte bzw. der Standardabweichungen aus den in den Schritten 201 und 204 berechneten Chaos Polynom Variablen verglichen. In einem sechsten Schritt 206 werden die Werte der einzelnen Koeffizienten aus den in den Schritten 202 und 204 berechneten Chaos Polynom Variablen verglichen. In einem siebten Schritt 207 wird die Plausibilität der im Schritt 204 berechneten stochastischen Modellausgabegröße als Chaos Polynom Variable auf Basis der in den Schritten 205 und 206 durchgeführten Vergleichen geprüft.

Denkbar ist es auch, diese Methodik für zeitliche stochastische Modellausgabegrößen anzuwenden. Daher ergeben sich insbesondere weitere mögliche technische Anwendungsgebiete für das Testen stochastischer Modelle, wobei im Folgenden mögliche Beispiele beschrieben werden.

Im Rahmen einer Fahrzeugführung kann beispielsweise ein Einfluss von Unsicherheiten und Störungen, z.B. Wind, Straßenreibung oder Schwerpunktlage auf die Fahrzeug Längs- und Querführung, z.B. Gierrate, longitudinaler und lateraler Fehler, Geschwindigkeit, Schwimmwinkel, insbesondere bei automatisierten und autonomen Fahrfunktionen, ermittelt werden.

Im Rahmen einer Lenkungsregelung/Steer-by-Wire kann beispielsweise ein Einfluss von Unsicherheiten und Störungen, z.B. Latenzen, Dämpfungen oder Steifigkeiten, auf die Lenkungsregelung, z.B. Zahnstangenposition/- geschwindigkeit oder Motorwinkel, ermittelt werden.

Ferner kann ein Einfluss von (zeitlichen) Unsicherheiten z.B. hinsichtlich Totzeiten und Jitter auf verteilte Regelfunktionen ermittelt werden, wie beispielsweise in Kommunikationsbasierter Steuerung (englisch: Communicationbased Control) oder in Produktionssystemen, über die E/E-Architektur verteilte Regelfunktionen - bspw. Bremsfunktionen oder auch bei in die Cloud-Architekturen ausgelagerten Regelfunktionen.

Im Folgenden werden zwei Erläuterungsbeispiele für das Verfahren gemäß Ausführungsbeispielen beschrieben. In einem ersten Erläuterungsbeispiel wird der Motorstrom I eines komplexen elektrischen Motormodells gemäß der nachstehenden Formel als stochastische Chaos Polynom Variable berechnet:

$$I = \sum_k I_k * \psi_k$$

, wobei $I_k$ die Koeffizienten der Polynome $\psi_k$ darstellen.
Zur Plausibilisierung der berechneten Lösung $I$ wird vorzugsweise eine Referenzlösung $I_{ref}$ als stochastische Variable aus z.B. SMC oder LHS berechnet. Aus dieser Referenzlösung kann eine stochastische Chaos Polynom Variable $I_{ref,per}$ mit Hilfe z.B. einer PCR ermittelt werden:

$$I_{ref,pcr} = \sum_k I_{ref,pcr,k} * \psi_k$$

, wobei $I_{ref,pcr,k}$ die Koeffizienten der Polynome $\psi_k$ darstellen. Bei der Plausibilisierung wird insbesondere für jeden $k \geq 0$ der Wert des Koeffizienten $I_k$ mit dem Wert des Koeffizienten $I_{ref,pcr,k}$ mit einer geeigneten Metrik verglichen. Daraus kann die Plausibilität des stochastisch berechneten Motorstroms $I$ abgeleitet werden.
Gemäß einem zweiten Erläuterungsbeispiel soll die Geschwindigkeit $v$ eines Fahrzeugs bei einer bestimmten Fahrmanöver zu einem bestimmten Wert eingehalten werden. In einer Frühauslegephase wird beispielsweise ein Geschwindigkeitsregler mit Hilfe eines komplexen Fahrzeugmodells, das zum Beispiel längs- und querdynamischen Effekte umfasst, entwickelt und kalibriert, um die Fahrzeuggeschwindigkeit mit spezifizierten Anforderungen zu regeln. Angenommen das komplexe Fahrzeugmodell berücksichtigt auch Parameterunsicherheiten, wie zum Beispiel beladungsabhängige Fahrzeugmasse und -trägheit oder zustandsabhängige Reifenparameter, um die Realität genauer nachzubilden. Das komplexe Fahrzeugmodell berechnet die Geschwindigkeit beispielsweise als stochastische Variable, unter anderem als Chaos Polynom Variable:

$$v = \sum_k v_k * \psi_k$$

, wobei $v_k$ die Koeffizienten der Polynome $\psi_k$ darstellen.
Eine Plausibilisierung der berechneten Geschwindigkeit ist insbesondere notwendig, um zu sichern, dass der Regler sich vor dessen Integration im realen Fahrzeug richtig verhält. Die Plausibilisierung ist beispielsweise dadurch erschwert, dass die Geschwindigkeit als stochastische Größe nicht nur aus einem Wert sondern aus einer statistischen Verteilung bestehen kann. Zur robusten Plausibilisierung der berechneten Geschwindigkeit v kann eine Referenzlösung $v_{ref}$ als stochastische Variable aus z.B. SMC oder LHS berechnet werden. Aus dieser Referenzlösung kann eine stochastische Chaos Polynom Variable $v_{ref,pcr}$ mit Hilfe z.B. einer PCR ermittelt werden:

$$v_{ref,pcr} = \sum_k v_{ref,pcr,k} * \psi_k$$

, wobei $v_{ref,per,k}$ die Koeffizienten der Polynome $\psi_k$ darstellen. Bei der Plausibilisierung wird vorzugsweise für jeden $k \geq 0$ der Wert des Koeffizienten $v_k$ mit dem Wert des Koeffizienten $v_{ref,pcr,k}$ mit geeigneter Metrik verglichen.

Daraus kann die Plausibilität der stochastisch berechneten Fahrzeuggeschwindigkeit v abgeleitet werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

**Patentansprüche**

1.  Verfahren (100) zum Prüfen einer Plausibilität einer stochastischen Testlösung für eine Messgröße eines technischen Systems (1), umfassend die nachfolgenden Schritte:

    - Bereitstellen (101) von Messdaten für die Messgröße des technischen Systems (1),
    - Ermitteln (102) einer ersten stochastischen Referenzlösung für die Messgröße des technischen Systems (1) unter Verwendung eines ersten Unsicherheitsquantifizierungsverfahrens auf Basis der bereitgestellten Messdaten, wobei die erste stochastische Referenzlösung die Messgröße modelliert, um zumindest eine statistische Charakterisierung der Messdaten bereitzustellen,
    - Ermitteln (103) einer zweiten stochastischen Referenzlösung aus einer Anwendung einer Regressionsmethode auf Basis der ermittelten ersten stochastischen Referenzlösung,
    - Vergleichen (104) der ermittelten ersten stochastischen Referenzlösung mit der ermittelten zweiten stochastischen Referenzlösung, um die ermittelte zweite stochastische Referenzlösung zu plausibilisieren,
    - Ermitteln (105) der stochastischen Testlösung für die Messgröße des technischen Systems (1) auf Basis von weiteren bereitgestellten Messdaten für die Messgröße, wobei das Ermitteln der stochastischen Testlösung unter Verwendung eines zweiten Unsicherheitsquantifizierungsverfahrens auf Basis einer Modellsimulation des technischen Systems (1) durchgeführt wird, um zumindest eine statistische Charakterisierung der weiteren Messdaten bereitstellen,
    - Vergleichen (106) der ermittelten zweiten stochastischen Referenzlösung mit der ermittelten stochastischen Testlösung, um die Plausibilität der stochastischen Testlösung für die Messgröße des technischen Systems (1) zu prüfen.

2.  Verfahren (100) nach Anspruch 1,
    **dadurch gekennzeichnet,**
    **dass** das Ermitteln (102) der ersten stochastischen Referenzlösung den folgenden Schritt umfasst:

    - Berechnen eines ersten Mittelwertes und einer ersten Standardabweichung auf Basis der bereitgestellten Messdaten.

3.  Verfahren (100) nach einem der vorhergehenden Ansprüche,
    **dadurch gekennzeichnet,**
    **dass** die Regressionsmethode auf Basis wenigstens eines Polynoms durchgeführt wird, wobei das Ermitteln (103) der zweiten stochastischen Referenzlösung den folgenden Schritt umfasst:

    - Berechnen von einzelnen Koeffizienten des wenigstens einen Polynoms.

4.  Verfahren (100) nach einem der vorhergehenden Ansprüche,
    **dadurch gekennzeichnet,**
    **dass** das Vergleichen (104) der ermittelten ersten stochastischen Referenzlösung mit der ermittelten zweiten stochastischen Referenzlösung den folgenden Schritt umfasst:

    - Ermitteln eines mittleren Abweichungsquadrats zwischen der ermittelten ersten stochastischen Referenzlösung und der ermittelten zweiten stochastischen Referenzlösung.

5.  Verfahren (100) nach einem der vorhergehenden Ansprüche,
    **dadurch gekennzeichnet,**
    **dass** die Messdaten aus einer Erfassung wenigstens eines Sensors des technischen Systems (1) resultieren, wobei das technische System eine Maschine, insbesondere ein Fahrzeug ist.

**6.** Verfahren (100) nach einem der vorhergehenden Ansprüche,
**dadurch gekennzeichnet,**
**dass** das Ermitteln (105) der stochastischen Testlösung auf Basis wenigstens eines Testpolynoms durchgeführt wird und/oder das Ermitteln (105) der stochastischen Testlösung wenigstens einen der folgenden Schritte umfasst:

- Berechnen von einzelnen Testkoeffizienten des Testpolynoms,
- Berechnen eines zweiten Mittelwerts und einer zweiten Standardabweichung auf Basis der berechneten Testkoeffizienten des Testpolynoms.

**7.** Verfahren (100) nach Anspruch 6,
**dadurch gekennzeichnet,**
**dass** das Verfahren ferner den folgenden Schritt umfasst:

- Vergleichen des berechneten ersten Mittelwerts mit dem berechneten zweiten Mittelwert und/oder der berechneten ersten Standardabweichung mit der berechneten zweiten Standardabweichung.

**8.** Verfahren (100) nach Anspruch 6 oder 7,
**dadurch gekennzeichnet,**
**dass** das Vergleichen (106) der ermittelten zweiten stochastischen Referenzlösung mit der ermittelten stochastischen Testlösung den folgenden Schritt umfasst:

- Vergleichen der Koeffizienten des Polynoms mit den Testkoeffizienten des Testpolynoms.

**9.** Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

**10.** Vorrichtung (10) zur Datenverarbeitung, die eingerichtet ist, das Verfahren (100) nach einem der Ansprüche 1 bis 8 auszuführen.

**11.** Computerlesbares Speichermedium (15), umfassend Befehle, die bei der Ausführung durch einen Computer (10) diesen veranlassen, die Schritte des Verfahrens (100) nach einem der Ansprüche 1 bis 8 auszuführen.

# Fig. 1

# Fig. 2

200

201

202

203

204

205

206

207

Europäisches Patentamt

European Patent Office

Office européen des brevets

# EUROPÄISCHER RECHERCHENBERICHT

Nummer der Anmeldung

EP 23 20 6575

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | XU YIJUN ET AL: "Propagating Uncertainty in Power System Dynamic Simulations Using Polynomial Chaos", IEEE TRANSACTIONS ON POWER SYSTEMS, IEEE, USA, Bd. 34, Nr. 1, 1. Januar 2019 (2019-01-01), Seiten 338-348, XP011701169, ISSN: 0885-8950, DOI: 10.1109/TPWRS.2018.2865548 [gefunden am 2018-12-19] * Zusammenfassung * * Algorithm 1, Algorithm 2 * * Tabelle II * * Seite 338, Spalte 2, Absatz 2 * * Seite 339, Spalte 1, Absatz 1-4 * * Seite 339, Spalte 2, Absatz 2-1 * * Seite 340, Spalte 1, Absatz 2 – Seite 341, Spalte 2, Absatz 1; Abbildung 1 * | 1-11 | INV. G06F30/20 G05B23/02 G06F17/18 G06F17/00 ADD. G06F111/08 |
| X | GAURAV KEWLANI: "A polynomial chaos approach to the analysis of vehicle dynamics under uncertainty", VEHICLE SYSTEM DYNAMICS: INTERNATIONAL JOURNAL OF VEHICLE MECHANICS AND MOBILITY, Bd. 50, Nr. 5, 1. Mai 2012 (2012-05-01), Seiten 749-774, XP093153043, GB ISSN: 0042-3114, DOI: 10.1080/00423114.2011.639897 * Zusammenfassung * * Seite 752, Absatz 2 – Seite 758, Absatz 2 * * Abbildungen 6-8, 12-19 * | 1-11 | |

RECHERCHIERTE SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| München | 19. April 2024 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)